# EUROPÄISCHE PATENTSCHRIFT

(11) **EP 0 582 159 B1**
(45) Veröffentlichungstag und Bekanntmachung des Hinweises auf die Patenterteilung: **03.01.1996**
(21) Anmeldenummer: 93111890.5
(22) Anmeldetag: 24.07.1993
(51) Int. Cl.: F04B 43/00, F02M 37/16, F04B 9/14

(54) **Handbetätigte Membranpumpe für eine Einspritzanlage einer Brennkraftmaschine**
Manually actuated diaphragm pump for an injection system of an internal combustion engine
Pompe à membrane actionnée à main pour un dispositif d'injection d'un moteur à combustion interne

(30) Priorität: 30.07.1992 DE 4225151
(43) Veröffentlichungstag der Anmeldung: 09.02.1994
(73) Patentinhaber: ROBERT BOSCH GMBH, D-70442 Stuttgart (DE)
(72) Erfinder: Straubel, Max, Dr. Dipl.-Ing., D-70329 Stuttgart (DE); Lucas, Bernhard, Dipl.-Ing., E-28034 Madrid (ES); Projahn, Ulrich, Dr. Dipl.-Ing., E-28109 Alcobendas Madrid (ES)

(56) Entgegenhaltungen:
- EP-A- 0 360 973
- DE-A- 3 327 437
- FR-A- 1 278 042
- FR-A- 1 291 460
- FR-A- 1 346 176
- FR-A- 2 073 769

## Beschreibung

### Stand der Technik

Die Erfindung geht aus von einer handbetätigbaren Membranpumpe für eine Filtereinrichtung einer Kraftstoff-Einspritzanlage einer Brennkraftmaschine nach der im Oberbegriff des Anspruchs 1 näher angegebenen Gattung.

Es ist schon eine solche handbetätigbare Membranpumpe aus der EP 0 360 973 A2 bekannt, die in eine Filtereinrichtung integriert ist und dazu dient, bei leergefahrenem Tank oder bei Filterwechsel die Kraftstoff-Einspritzanlage der Brennkraftmaschine wieder zu befüllen. Die Membranpumpe hat eine schalenförmige, nach außen gewölbte Membran, die zusammen mit einem Gehäuse einen druckmittelgefüllten Arbeitsraum begrenzt und direkt von Hand gegen Federkraft betätigt wird. Eine solche Membranpumpe hat im Verhältnis zur Baugröße ein großes Pumpvolumen und kommt bei einfacher Gestaltung mit relativ wenigen und billigen Einzelteilen aus. Von Nachteil bei dieser Membranpumpe ist jedoch, daß sie in ein Gehäusemodul integriert ist, an dem ein Dieselfilter quer zur Pumpenachse angebaut wird, und an dem fluidische Anschlüsse in mehreren Flächen liegen. Dies führt zu einer relativ aufwendigen und unflexiblen Bauweise, da der Gehäusemodul zusätzliche Funktionen mitübernimmt und die Membranpumpe nicht für sich allein verwendet werden kann. Zudem ist ungünstig, daß die Membranpumpe mehrteilige Ventileinsätze aufweist.

Ferner ist aus der DE 33 27 437 C2 eine Kraftstoff-Filtereinrichtung für Diesel-Brennkraftmaschinen mit einer Membranpumpe bekannt, bei dem die handbetätigbare Membranpumpe und die Filterbox koaxial zueinander in der Filter-Längsachse angeordnet sind. Von Nachteil bei dieser Membranpumpe ist nicht nur, daß sie mit handbetätigbarem Stößel, Stößelführung und einem die Membran schützenden Außendeckel verhältnismäßig teuer und aufwendig baut, sondern daß sie nicht für eine Modulbauweise geeignet ist.

Weiterhin ist aus der FR-A-1 346 176 eine handbetätigbare Membranpumpe bekannt, deren nach außen gewölbte, schalenförmige Membran mit ihrem Rand dicht an einem Pumpengehäuse befestigt ist. Dieses Pumpengehäuse hat ein scheibenförmiges Oberteil, mit dem es in ein kreisrundes Loch eines plattenförmigen Maschinenteils einsetzbar ist und das mit einem am Oberteil angeformten quaderförmigen Unterteil aus dem Maschinenteil nach unten herausragt. In diesem Unterteil sind eigene Ventileinsätze für Saug- und Druckventil angeordnet und auf zwei entgegengesetzt liegenden, schmalen Außenseiten des Unterteils sind zwei Rohrleitungen angeschlossen, die gleichachsig zueinander und quer zur Handbetätigungsrichtung liegen. Eine Modulbauweise zum Anbau der Membranpumpe an einem Gehäusemodul ist hierbei nicht vorgesehen.

### Vorteile der Erfindung

Die handbetätigbare Membranpumpe für eine Filtereinrichtung in einer Kraftstoff-Einspritzanlage einer Brennkraftmaschine mit den kennzeichnenden Merkmalen des Anspruchs 1 hat demgegenüber den Vorteil, daß sie sich für eine Modulbauweise eignet und dabei relativ einfach und kostengünstig baut. Die Membranpumpe kann als Modul koaxial zur Längsachse des Kraftstoffilters angeordnet werden, was eine raumsparende Bauweise begünstigt und vielseitige Einsatzmöglichkeiten eröffnet. Die Membranpumpe eignet sich für eine leichte, automatisierbare Montage und erlaubt eine gute Einbringung der Handkraft auf fast die gesamte Membranfläche.

Durch die in den Unteransprüchen aufgeführten Maßnahmen sind vorteilhafte Weiterbildungen und Verbesserungen der im Anspruch 1 angegebenen Membranpumpe möglich. Eine besonders platzsparende und kostengünstige Bauweise ergibt sich, wenn die Membranpumpe gemäß Anspruch 2 ausgebildet wird. Äußerst zweckmäßig ist es, wenn in der Membranpumpe das Saug- und das Druckventil nach Anspruch 3 ausgebildet werden. Auf diese Weise lassen sich mit wenigen Einzelteilen einfache und sichere Ventile erreichen. Vorteilhaft für eine sichere Arbeitsweise der Membranpumpe ist ferner, wenn sie nach den Ansprüchen 4 und 5 ausgeführt wird. Auf diese Weise können die Rückstellkräfte von Membran einerseits und Feder andererseits besser zusammenwirken. Weitere vorteilhafte Ausgestaltungen ergeben sich aus den übrigen Ansprüchen.

Durch die in den Unteransprüchen aufgeführten Maßnahmen sind vorteilhafte Weiterbildungen und Verbesserungen der im Hauptanspruch angegebenen Membranpumpe möglich. Eine besonders platzsparende und kostengünstige Bauweise ergibt sich, wenn die Membranpumpe gemäß Anspruch 2 ausgebildet wird. Äußerst zweckmäßig ist es, wenn in der Membranpumpe das Saug- und das Druckventil nach Anspruch 3 ausgebildet wird. Auf diese Weise lassen sich mit weniger Einzelteilen einfache und sichere Ventile erreichen. Vorteilhaft für eine sichere Arbeitsweise der Membranpumpe ist es ferner, wenn sie nach den Ansprüchen 4 und 5 ausgebildet wird. Auf diese Weise können die Rückstellkräfte von Membran einerseits und Feder andererseits besser zusammenwirken. Weitere vorteilhafte Ausgestaltungen ergeben sich aus den übrigen Ansprüchen, der Beschreibung sowie der Zeichnung.

### Zeichnung

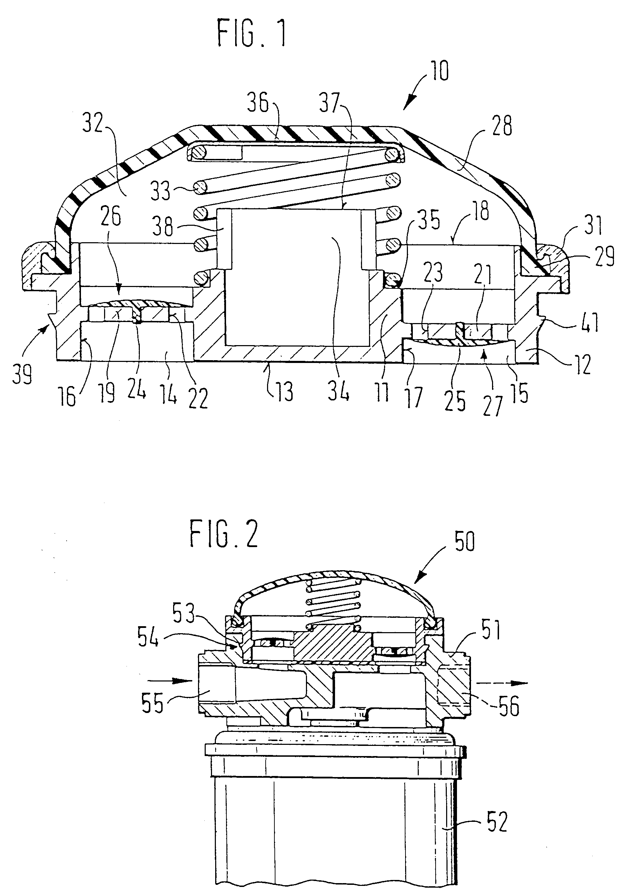

Zwei Ausführungsbeispiele der Erfindung sind in der Zeichnung dargestellt und in der nachfolgenden Beschreibung näher erläutert. Es zeigen Figur 1 einen Längsschnitt durch eine handbetätigbare Membranpumpe und Figur 2 einen Längsschnitt durch eine zweite Ausführungsform einer Membranpumpe in vereinfachter Darstellung, wobei die Membranpumpe über einen Gehäusemodul an einem Kraftstoffilter befestigt ist.

### Beschreibung der Ausführungsbeispiele

Die Figur 1 zeigt in vereinfachter Darstellung einen Längsschnitt durch eine handbetätigbare Membranpumpe 10, wie sie zusammen mit einer Filtereinrichtung in einer Kraftstoff-Einspritzanlage einer Brennkraftmaschine verwendet wird, um bei leergefahrenem Tank oder bei Filterwechsel die Einspritzanlage wieder zu befüllen.

Die Membranpumpe 10 weist ein Pumpengehäuse 11 auf, das als rotationssymmetrische Ringscheibe ausgebildet ist, deren Außendurchmesser ein Mehrfaches ihrer axialen Dicke beträgt, so daß sie relativ flach baut. Dieses Pumpengehäuse 11 ist vorzugsweise als Kunststoffspritzteil aus einem kraftstoffbeständigen Kunststoff wie zum Beispiel Polyamid hergestellt. Das Pumpengehäuse 11 weist einen zylindrischen Sockel 12 auf, der stirnseitig in einer ebenen Anbaufläche 13 endet. In dieser Anbaufläche 13 liegen auf gleichem Durchmesser und diametral zueinander ein Zulauf 14 sowie ein Ablauf 15. Von dem Zulauf 14 und dem Ablauf 15 führen eine Zulaufbohrung 16 bzw. eine Ablaufbohrung 17 zu einer zweiten Stirnfläche 18, die entgegengesetzt zur Anbaufläche 13 am Pumpengehäuse 11 ausgebildet ist. Diese Bohrungen 16, 17 verlaufen zueinander und zur Längsachse der Membranpumpe 10 parallel. Ferner sind diese Bohrungen 16, 17 jeweils durch einen Trennsteg 19 bzw. 21 unterbrochen, in denen jeweils mehrere kreisförmig angeordnete Durchlaß-Bohrungen 22 bzw. 23 angeordnet sind. In jedem Trennsteg 19, 21 ist in einer zentralen öffnung ein Ventilpilz 24 bzw. 25 eingeknöpft, die mit ihrem äußeren Rand jeweils die Durchlaß-Bohrungen 22 bzw. 23 überdecken. Diese Ventilpilze 24, 25 werden aus einem dauerelastischen und kraftstoffbeständigen Elastomer hergestellt und bilden auf diese Weise Teile eines zulaufseitigen Saugventils 26 bzw. eines ablaufseitigen Druckventils 27. Diese Ventilpilze 24, 25 sind so ausgebildet, daß ihr äußerer Rand durch einen schon geringfügigen Staudruck einer Kraftstoffströmung in Strömungsrichtung weggedrückt wird und dabei die zugeordneten Durchlaß-Bohrungen 22 bzw. 23 freigibt. Umgekehrt ist in entgegengesetzter Strömungsrichtung die Dichtwirkung der Ventilpilze 24, 25 selbstverstärkend, da nun der Druck deren Dichtlippen anpresst.

Das Pumpengehäuse 11 wird auf seiner zweiten Stirnfläche 18 von einer nach außen gewölbten, schalenförmigen Membran 28 überspannt, die an ihrem äußeren Rand 29 mit Hilfe eines Halterings 31 am Außenumfang des Pumpengehäuses 11 dicht und ausreißfest befestigt ist. Der Haltering 31 kann dabei mit dem Pumpengehäuse verschweißt oder verklebt werden. Die dauerelastische Membran 28 besteht vorzugsweise aus einem Silikonkautschuk, um die Anforderungen an Elastizität, Kraftstoffbeständigkeit und Druckbeanspruchung zu erfüllen. Entsprechend den jeweiligen Druckanforderungen wird sie auch mit einer geeigneten Wandstärke von wenigen Millimetern ausgebildet. Die Membran 28 begrenzt auf diese Weise zusammen mit dem Pumpengehäuse 11 einen der Pumpfunktion dienenden Arbeitsraum 32, über den das Saugventil 26 mit dem Druckventil 27 fluidisch verbunden ist.

Die Membran 28 wird von einer Feder 33 in ihrer gewölbten Ausgangsstellung gehalten, wobei die Feder 33 von einem hülsenförmigen Teil 35 des Pumpengehäuses 11 zentral fixiert und geführt wird und sich über eine angeformte Schulter 35 am Pumpengehäuse 11 abstützt. Um die Federkraft möglichst gleichmäßig auf eine große Fläche der Membran 28 zu verteilen, ist zwischen Membran und Feder eine Federplatte 36 angeordnet. Die axiale Länge des hülsenförmigen Teils 34 ist so gewählt, daß sie die Blocklänge der Feder 33 überragt und einen Anschlag 37 für die Membran 28 bildet. Um die Überströmung zwischen Saugventil 26 und Druckventil 27 zu verbessern, sind in dem hülsenförmigen Teil 34 zusätzlich axiale Schlitze 38 angeordnet.

Das Pumpengehäuse 11 ist mit seinem Sockel 12 und der Anbaufläche 13 so ausgebildet, daß es einen Steckeranschluß 39 bildet, der zusammen mit einem Buchsenanschluß eines anderen Modulbausteins eine Steckverbindung ermöglicht, so daß die Membranpumpe 10 selbst einen Modulbaustein bildet und ohne weiteres an einen anderen passenden Modulbaustein anbaubar ist. Dabei läßt sich die Steckverbindung zu einer Schnappverbindung erweitern, indem an der Mantelfläche des Sockels 12 außen ein ringförmiger Wulst 41 angeformt ist, zu der eine geeignete Ringnut in dem Buchsenanschluß der Steckverbindung gehört. Diese Möglichkeit des Einsatzes der Membranpumpe 10 als Modulbaustein ist in Figur 2 näher dargestellt, auf die nun Bezug genommen wird.

Die Figur 2 zeigt in vereinfachter Darstellung eine Membranpumpe 50, die im Prinzip gleichartig aber konstruktiv einfacher als die Membranpumpe 10 nach Figur 1 aufgebaut ist und die hier als Pumpenmodul an einen Gehäusemodul 51 angebaut ist, an dem wiederum ein Dieselfilter 52 mit Hilfe einer üblichen Zentralverschraubung befestigt ist. Der Gehäusemodul 51 weist einen zum Steckeranschluß 39 passenden Buchsenanschluß 53 auf, die zusammen den Steckanschluß 54 für die Modulbausteine 50, 51 bilden. Der Gehäusemodul 51 weist hier einen Zulaufanschluß 55 sowie einen Ablaufanschluß 56 auf, die beide in der gleichen radialen Ebene liegen und am Außenumfang des scheibenförmig ausgebildeten Gehäusemoduls 51 angeordnet sind.

Die Wirkungsweise der Membranpumpe 10 bzw. 50 wird wie folgt erläutert, wobei auf beide Figuren Bezug genommen wird. Der zu reinigende Kraftstoff wird am Gehäusemodul 51 dem Zulaufanschluß 55 zugeführt, durchströmt beim Betätigen der Membranpumpe 10 bzw. 50 hintereinander das Saugventil 26, den Arbeitsaum 32 sowie das Druckventil 27 und wird anschließend durch den Gehäusemodul 51 hindurch in die Schmutzseite des Dieselfilters 52 gepreßt. Das gereinigte Druckmittel aus dem Dieselfilter 52 gelangt über die nicht näher gezeichnete zentrale Hohlverschraubung zum Ablaufanschluß 56 im Gehäusemodul 51.

Die Pumpenfunktion selbst erfolgt durch Handdruck auf die Membran 28. Dabei wird der Arbeitsraum 32 in seinem Volumen verkleinert und der Kraftstoff bzw. bei den ersten Pumpenhüben die Luft, über das Druckventil 27 verdrängt. Das Saugventil 26 ist dabei dicht verschlossen. Die Membran 28 wird dabei von Hand gegen ihre eigene Elastizität und gegen die Kraft der Feder 33 in Richtung zweiter Stirnseite 18 gedrückt, wobei ihr Hub durch den Anschlag 37 begrenzt ist. Nach dem Loslassen der Membran 28 wirken deren eigene Rückstellkraft sowie die Rückstellkraft der Feder 33 und erzeugen im Arbeitsraum 32 einen Unterdruck, wodurch Kraftstoff vom Zulaufanschluß 55 über das Saugventil 26 in den Arbeitsraum 32 gesaugt wird.

Die Membranpumpe 50 zeigt lediglich eine gegenüber der Membranpumpe 10 kostengünstigere Variante, bei der auf eine Federplatte und das hülsenförmige Führungsteil verzichtet wurde und der Rand der Membran in eine spezielle Formnut des Pumpengehäuses 11 eingespannt ist.

Mit der erfindungsgemäßen Membranpumpe 10, 50 läßt sich somit eine Modulbauweise realisieren, bei der die einzelnen Bausteine äußerst kompakt und platzsparend zusammengefügt werden können. Die Vorteile solcher Membranpumpen, bei denen die den Arbeitsraum nach außen abdichtende Membran zugleich auch von Hand betätigbar ist, lassen sich weiterhin beibehalten.

Selbstverständlich sind an den gezeigten Ausführungsformen Änderungen möglich, ohne vom Gedanken der Erfindung abzuweichen. So läßt sich das Pumpengehäuse ohne weiteres auch so ausbilden, daß es anstelle des gezeigten Steckeranschlusses mit dem zugehörigen Buchsenanschluß einer Steckverbindung für Modulbauweise ausgestattet wird. Die Schnappverbindung kann je nach Bedarf lösbar oder unlösbar ausgeführt werden. Auch gehen die Vorteile der Modulbauweise nicht verloren, wenn anstelle der gezeigten Schnappverbindung andere Befestigungsmittel wie zum Beispiel eine Schraubverbindung zum Befestigen der Module aneinander gewählt werden.

## Patentansprüche

1. Handbetätigbare Membranpumpe (10) für eine Filtereinrichtung in einer Kraftstoff-Einspritzanlage einer Brennkraftmaschine, mit einem Pumpengehäuse (11), an dem eine nach außen gewölbte, schalenförmige Membran (28) mit ihrem Rand (29) dicht befestigt ist und mit dem Pumpengehäuse (11) einen Arbeitsraum begrenzt, der über ein Saugventil (26) mit einem Zulauf (14) und über ein Druckventil (27) mit einem Ablauf (15) im Pumpengehäuse verbunden ist, wobei die Membran (28) beim Pumpen außen von Hand gegen die Kraft einer im Arbeitsraum angeordneten Feder (33) betätigbar ist, dadurch gekennzeichnet, daß das Pumpengehäuse (11) im wesentlichen die Form einer Ringscheibe hat, deren Durchmesser ein Mehrfaches ihrer Dicke beträgt und daß das Pumpengehäuse (11) auf seiner der Membran (28) entgegengesetzt liegenden Stirnseite (13) mit einem zylindrisch in die Stirnseite (13) auslaufenden Sockel (12) einen Steckeranschluß (39)als Teil einer für eine Modulbauweise vorgesehenen Steckverbindung (54) aufweist, mit welchem Steckeranschluß (39) daß Pumpengehäuse (11) in einen angrenzenden Gehäusemodul (51) einsteckbar ist, das als zugeordnetes zweites Teil der Steckverbindung (54) einen zum Steckeranschluß (59) passenden Buchsenanschluß (53) aufweist, wobei dieser Steckeranschluß (39) eine stirnseitig liegende Anbaufläche (13) hat, in welcher der Zulauf (14) und der Ablauf (15) liegen, welche mit den zugeordneten Anschlüssen (55, 56) im Gehäusemodul (51) Verbindung haben.

2. Membranpumpe nach Anspruch 1, dadurch gekennzeichnet, daß im Pumpengehäuse (11) von der Anbaufläche (13) eine Zulaufbohrung (16) und eine dazu parallele Ablaufbohrung (17) zur anderen Stirnfläche (18) der Ringscheibe (11) verlaufen, wobei beide Bohrungen (16, 17) durch Trennstege (19, 21) unterbrochen sind, in denen die Ventile (26, 27) angeordnet sind.

3. Membranpumpe nach Anspruch 2, dadurch gekennzeichnet, daß die beiden Ventile (26, 27) jeweils einen dauerelastischen Ventilpilz (24, 25) aus Kunststoff aufweisen, der mit Öffnungen (22, 23) in den Trennstegen (19, 21) zusammenarbeitet.

4. Membranpumpe nach einem der Ansprüche 1 bis 3, dadurch gekennzeichnet, daß die zentral angeordnete Feder (33) sich über eine Federplatte (36) an der Membran (28) abstützt und durch ein gehäusefestes, rohrartiges Teil (34) geführt ist.

5. Membranpumpe nach Anspruch 4, dadurch gekennzeichnet, daß das Führungsteil (34) einen Anschlag (37) zur Hubbegrenzung der Membran (28) bildet und insbesondere eine Querströmung verbessernde Schlitze (38) aufweist.

6. Membranpumpe nach einem der Ansprüche 1 bis 5, dadurch gekennzeichnet, daß der äußere Rand (29) der Membran (28) im wesentlichen dem Außendurchmesser der Ringscheibe (11) entspricht.

7. Membranpumpe nach einem oder mehreren der Ansprüche 1 bis 6, dadurch gekennzeichnet, daß der Zulauf (14) und der Ablauf (15) auf dem gleichen Durchmesser und zueinander diametral in der ebenen Anbaufläche (13) liegen.

## Claims

1. Manually actuated diaphragm pump (10) for a filter device in a fuel injection system of an internal combustion engine, with a pump housing (11) to which an outward-arched, dish-shaped diaphragm (28) is fastened in leaktight fashion by its rim (29) and, with the pump housing (11), delimits a working space which is connected in the pump housing to an inlet (14) via an inlet valve (26) and to an outlet (15) via a delivery valve (27), the diaphragm (28) being externally actuable by hand during pumping, against the force of a spring (33) arranged in the working space, characterized in that the pump housing (11) essentially has the shape of an annular disc, the diameter of which is several times its thickness, and in that at its end (13) remote from the diaphragm (28), the pump housing (11) has, with a pedestal (12) running out cylindrically to the end (13), a plug connector (39) as part of a plug-in connection (54) provided for modular construction, by means of which plug connector (39) the pump housing (11) can be inserted into an adjoining housing module (51) which, as the associated second part of the plug-in connection (54), has a socket connector (53) which matches the plug connector (39), this plug connector (39) having a mounting surface (13), situated at the end, in which the inlet (14) and the outlet (15) are situated, these being connected to the associated connections (55, 56) in the housing module (51).

2. Diaphragm pump according to Claim 1, characterized in that, in the pump housing (11), an inlet hole (16) and an outlet hole (17) parallel thereto run from the mounting surface (13) to the other end face (18) of the annular disc (11), both holes (16, 17) being interrupted by dividing webs (19, 21) in which the valves (26, 27) are arranged.

3. Diaphragm pump according to Claim 2, characterized in that the two valves (26, 27) each have a permanently elastic valve head (24, 25) made of plastic which interacts with openings (22, 23) in the dividing webs (19, 21).

4. Diaphragm pump according to one of Claims 1 to 3, characterized in that the centrally arranged spring (33) is supported on the diaphragm (28) via a spring plate (36) and is guided by a tubular part (34) fixed to the housing.

5. Diaphragm pump according to Claim 4, characterized in that the guiding part (34) forms a stop (37) to limit the travel of the diaphragm (28) and, in particular, has slots (38) which improve transverse flow.

6. Diaphragm pump according to one of Claims 1 to 5, characterized in that the outer rim (29) of the diaphragm (28) corresponds essentially to the outside diameter of the annular disc (11).

7. Diaphragm pump according to one or more of Claims 1 to 6, characterized in that the inlet (14) and the outlet (15) lie on the same diameter and are located diametrically with respect to one another in the flat mounting surface (13).

## Revendications

1. Pompe à membrane à commande manuelle (10) pour une installation de filtre d'un dispositif d'injection de carburant d'un moteur à combustion interne , comprenant un boîtier de pompe (11) auquel est fixée de manière étanche, par son bord (29), une membrane (28) en forme de coquille, bombée vers l'extérieur, pour délimiter une chambre travail avec le boîtier de pompe (11), cette chambre étant reliée à une arrivée (14) par un clapet d'aspiration (26) et à une sortie (15) par un clapet de pression (27) dans le boîtier de pompe, la membrane (28) étant actionnée manuellement pour le pompage, de l'extérieur, contre la force d'un ressort (33) placé dans la chambre de travail, caractérisée en ce que le boîtier de pompe (11) a pratiquement la forme d'un disque annulaire dont le diamètre représente un multiple de son épaisseur, et le boîtier de pompe (11) comporte sur sa face frontale (13) opposée à la membrane (28), un socle cylindrique (12) se terminant au niveau de la face frontale (13) par un raccord d'enfichage (39) faisant partie d'une liaison par enfichage (54) permettant une construction modulaire, et le boîtier de pompe (11) peut s'engager par ce raccord enfichable (39) dans un module de boîtier annulaire adjacent (51), qui comporte comme seconde partie de la liaison par enfichage (54), un raccord de manchon (53) adapté par enfichage (59), et ce raccord (39) présente sur sa face frontale une surface de montage (13) dans laquelle se situent l'arrivée (14) et la sortie (15), communiquant avec les raccords correspondants (55, 56), du module de boîtier (51).

2. Pompe à membrane selon la revendication 1, caractérisée en ce que, dans le boîtier de pompe (11), un perçage d'alimentation (16) et un perçage de sortie (17) parallèle au précédent, sont prévus au niveau de la surface de montage (13) pour arriver à l'autre face frontale (18) du disque annulaire (11), les deux perçages (16, 17) étant interrompus par des cloisons de séparation (19, 21) équipées de clapets (26, 27).

3. Pompe à membrane selon la revendication 2, caractérisée en ce que les deux clapets (26, 27) comportent un clapet en forme de champignon (24, 25) en matière plastique, à élasticité permanente, coopérant avec les ouvertures (22, 23) des cloisons de séparation (19, 21).

4. Pompe à membrane selon l'une des revendications 1 à 3, caractérisée en ce que le ressort (33) disposé de manière centrale, s'appuie contre la membrane (28) par l'intermédiaire d'une plaque à ressort (36) et est guidé sur une partie en forme de manchon (34) solidaire du boîtier.

5. Pompe à membrane selon la revendication 4, caractérisée en ce que la partie de guidage (34) forme une butée (37) pour limiter la course de la membrane (28) et comporte notamment des fentes (38) améliorant l'écoulement transversal.

6. Pompe à membrane selon l'une des revendications 1 à 5, caractérisée en ce que le bord extérieur (29) de la membrane (28) correspond essentiellement au diamètre extérieur du disque annulaire (11).

7. Pompe à membrane selon l'une ou plusieurs des revendications 1 à 6, caractérisée en ce que l'arrivée (14) et la sortie (15) sont situées sur le même diamètre, dans des positions diamétralement opposées, dans la surface de montage (13) plane.
